# EUROPEAN PATENT APPLICATION

(11) **EP 4 375 455 A1**
(43) Date of publication of application: **29.05.2024**
(21) Application number: 21950863.7
(22) Date of filing: 22.07.2021
(51) Int. Cl.: E04H 12/34, F03D 13/20, E04H 12/12, F03D 80/80

(54) **CONCRETE TOWER WITH SEVERAL SECTIONS**

(71) Applicant: Windtechnic Engineering, S.L., 20018 San Sebastián Guipuzcoa (ES)
(72) Inventor: BENAVIDES OCHOA-AIZPURUA, Jokin, 20018 San Sebastián (Gipuzkoa) (ES); LANDEIRA PEREIRA, Álvaro, 20018 San Sebastián (Gipuzkoa) (ES)
(74) Representative: Capitán García, Maria Nuria
(86) International application number: PCT/ES2021/070550
(87) International publication number: WO 2023/002069

(57) **Abstract**

Concrete tower having multiple sections, easy to install and allowing it to be designed with a certain dynamic behaviour, each section having an annular configuration and comprising a lower face, an upper face, an inner face and an outer face, each section being arranged superimposed with an adjacent section, the lower face of one section being superimposed on the upper face of the adjacent section; the lower face and the upper face are flat, a joint with an annular configuration is arranged in contact with the lower face and the upper face of adjacent sections, the joint being made of polymeric material.

## Description

### TECHNICAL FIELD OF THE INVENTION

The present invention is encompassed within the field of vertical structures made up of multiple superimposed sections, specifically concrete towers having multiple sections, such as those that make up the towers or masts of wind turbines.

### BACKGROUND OF THE INVENTION

Currently, multiple and varied types of towers are widely known for supporting wind turbines or for other applications. The technological trend of increasing the unit power of wind turbines implies the use of larger blades, which inevitably leads to greater loads on the structure. Likewise, the saturation of sites with better wind conditions forces the installation of new wind farms in places with lower winds, which also forces the use of larger blades to capture more wind, and the search for higher hub heights in order to find higher wind speeds at higher altitudes.

All of the above implies earlier starts, so that the wind turbines begin to produce energy with lower wind speeds, and slower rotor rotation speeds, around or even below 10 rpm. This results in the need to have taller, more resistant structures with stricter dynamic behaviour requirements, which represents an increasing challenge with the solutions and materials currently available on the market.

One of the increasingly common solutions for higher-power wind turbines are towers that use prefabricated concrete elements for their construction. Concrete is a robust material that can withstand large loads, making it an attractive solution from the point of view of the increasing loads transmitted by wind turbines. However, by its very nature, it requires thicknesses much greater than those of steel, which tends to stiffen the structure, contrary to what is required by large generators located at great heights.

Patent ES2272954T3 is known wherein a tower having multiple sections or segments of prefabricated concrete and of a prismatic or cylindrical shape is explained, each section being formed by multiple segments superimposed on each other, placing the lower face of one section in contact with the upper face of the adjacent section, leaving a space that is filled with mortar as a horizontal sealing joint. An analogous solution is explained in utility model ES1058539U, where in addition to mortar, another option is that the consecutive sections be assembled using a tongue-and-groove fit.

Patent ES2326010B2 explains a tower having multiple prefabricated concrete sections or segments, wherein the consecutive sections are joined by multiple bars with mortar filling. A similar configuration is shown in patent ES2704624T3, wherein the filling is concrete.

The embodiments of the patents discussed above present the drawback that the application of the horizontal joints between sections is an added operation to be carried out during the assembly phase of the tower.

There have been some attempts to improve the joining techniques between tower sections by developing jointless technologies, as explained in patent WO201421927A2, in which the conjugated concreting of one section against the next avoids arranging any type of joint by guaranteeing proper support. Patent ES2643088T3 is also known, which explains that the contact surfaces of the adjacent sections are machined until suitable tolerances are obtained that allow support between the sections without additional material between them.

All the joints between cited concrete tower sections maintain a high rigidity between the sections, since it is usually sought that the joining material maintains the mechanical properties of the concrete, which implies either prior machining work or an added pouring or forming operation during tower assembly. A joint between concrete tower sections that is easy to install and allows a certain flexibility between the sections becomes necessary.

### DESCRIPTION OF THE INVENTION

The present invention is established and characterised in the independent claim, while the dependent claims describe other characteristics thereof.

The object of the invention is a tower having concrete sections joined together. The technical problem to be solved is to configure such section joint so that it is easy to install and allows a tower to be designed with a certain dynamic behaviour.

In view of the above, the present invention relates to a concrete tower having multiple sections. "Section" means a segment or part, so that the conjunction of multiple superimposed sections gives rise to the intended configuration.

Each section has an annular configuration and comprises a lower face, an upper face, an inner face and an outer face. The annular configuration can be of any type, usually cylindrical or regular prismatic, although it could be any other.

The spatial designations "lower", "upper", "inner" and "outer" mean those usually accepted when the tower and its sections are mounted in their final position on an approximately horizontal floor.

Each section is arranged superimposed with an adjacent section, the lower face of one section being superimposed on the upper face of the adjacent section, as is known in the state of the art.

The tower is characterised in that the lower face and the upper face are flat, a joint with an annular configuration is arranged in contact with the lower face and the upper face of adjacent sections, the joint being made of polymeric material.

In this way, the sections are superimposed with a joint made of polymeric material between said sections, with an annular configuration similar to that of the lower and upper faces of adjacent sections, the seat of said joint on each lower or upper face having a flat configuration, that is, the support of the joint is flat. The joint usually has flat faces, although it could have curved or combined faces, since the elasticity of the material and the weight of the sections secures the seat of the joint between the sections. A single joint or several superimposed joints can be arranged.

An advantage in line with the object of the invention is that the joint is easy to install, since it merely has to be placed on the lower or upper face, and this work can be carried out at ground level and not at height.

Another advantage also in line with the object of the invention is that it allows the tower to be designed with the dynamic behaviour required, since the selection of the polymeric material of the joint and its dimensions allows the tower to behave as desired against bending, torsion and vibrations.

Another advantage is that the joint is simple to make and economical, since it merely involves annular production using a known polymeric material.

### BRIEF DESCRIPTION OF THE FIGURES

The present specification is complemented by a set of figures which illustrate a preferred embodiment, and which in no way limit the invention.
Figure 1 represents a profile view of a wind turbine with a tower having multiple sections.
Figure 2 represents a cross section of two adjacent sections with a joint, close together and separated, shown in Figure 3 in their final assembled position.
Figure 4 represents a plan view of the joint of Figures 2 and 3.
Figure 5 represents the joint of Figures 2 and 3 but made up of multiple segments.
Figure 6 represents a partial cross section of two adjacent sections with a joint when each section includes vertical holes.
Figure 7 represents a partial cross section of two adjacent sections with a joint when one section includes a bar that is introduced into the adjacent section.
Figure 8 represents a partial plan view of the joint of Figures 6 and 7.
Figure 9 represents an assembly of two adjacent sections with the joint installed in the lower section.
Figure 10 represents an assembly of two adjacent sections with the joint arranged in the upper section.

### DETAILED EXPLANATION OF THE INVENTION

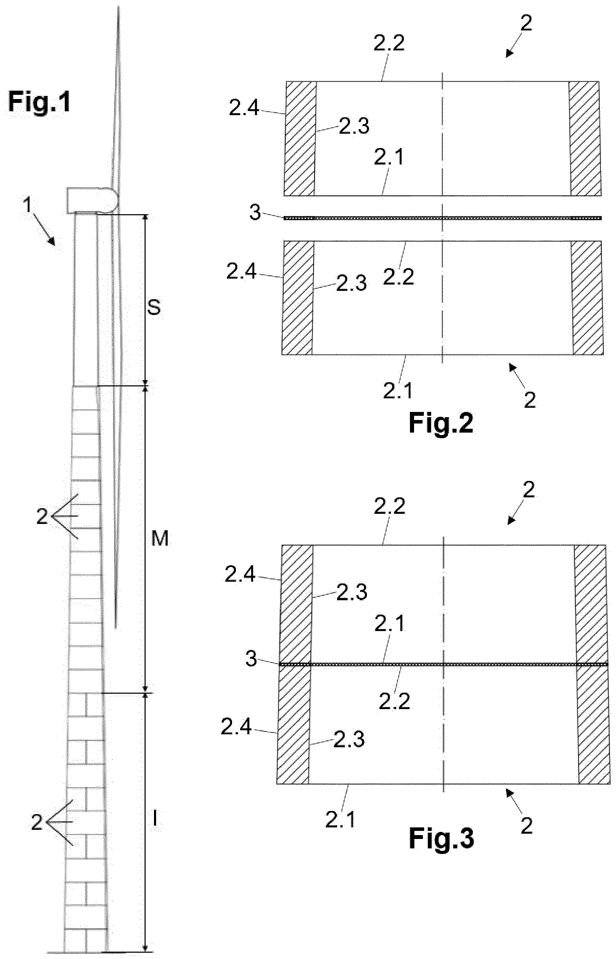

Figure 1 shows a wind turbine whose tower or mast (1) is made up of multiple sections (2). In the lower portion (I), the sections (2) are made up of several parts or slices, from two to as many as necessary, two consecutive slices being joined by a vertical joint, arranged so that the vertical joint is alternated between adjacent sections (2), being an example because it can be aligned or otherwise; in the middle portion (M) the sections (2) are made of a single piece; the upper portion (S) is a single piece of steel, in order to show that the invention is valid for any type of tower (1), such as the one shown in the so-called hybrid type wind turbine, since it not only includes one material in the sections (2), concrete, but also steel.

Thus, the lower (I) and middle (M) portions of the configuration of Figure 1 show a concrete tower (1) having multiple sections (2), each section (2) is annular in configuration and comprises a lower face (2.1), an upper face (2.2), an inner face (2.3) and an outer face (2.4), as detailed in Figures 2 and 3. Each section (2) is arranged superimposed with an adjacent section (2), the lower face (2.1) of one section (2) being superimposed on the upper face (2.2) of the adjacent section (2), Figure 3. The lower face (2.1) and the upper face (2.2) are flat, a joint (3) with an annular configuration is arranged in contact with the lower face (2.1) and the upper face (2.2) of adjacent sections (2), Figures 2 and 3, the joint (3) being made of polymeric material. Figures 2, 3, 6, 7, 9 and 10 show a single joint (3), although multiple superimposed joints could be arranged; for example, if there are multiple joints (3) of a certain thickness and a greater thickness needs to be covered, for which it is not necessary to make a new joint (3) with the total thickness, but rather multiple joints (3) can be stacked whose sum of thicknesses is the desired thickness.

It is advantageously verified that if the modulus of elasticity of the polymeric material is less than or equal to 2,000 MPa, the dynamic behaviour of the tower (1) is controllable and adjustable in a simple way according to the value of modulus of elasticity that is chosen, especially combined with the thickness of the material as explained in the example of the embodiment below. Specifically, the polymeric material is one of the following or a combination thereof: rubber, polyamide, polytetrafluoroethylene, polyethylene, polypropylene, polyurethane, polyamide and polycarbonate. Optionally, any of them or any combination may include reinforcing fibres. In this way, known materials can be used, both in their pure form and alone, and their combination, even with recycled material, adjusting the modulus of elasticity according to the case.

Another option is that the joint (3) has a thickness of between 4 mm and 40 mm, this range being one that has been proven to be suitable.

Another option is that the joint (3) has a coefficient of friction of between 0.05 and 0.75, usually coming from the roughness of the joint (3). The coefficient of friction is considered as the relationship between the normal force acting between two surfaces and the maximum friction between the two surfaces.

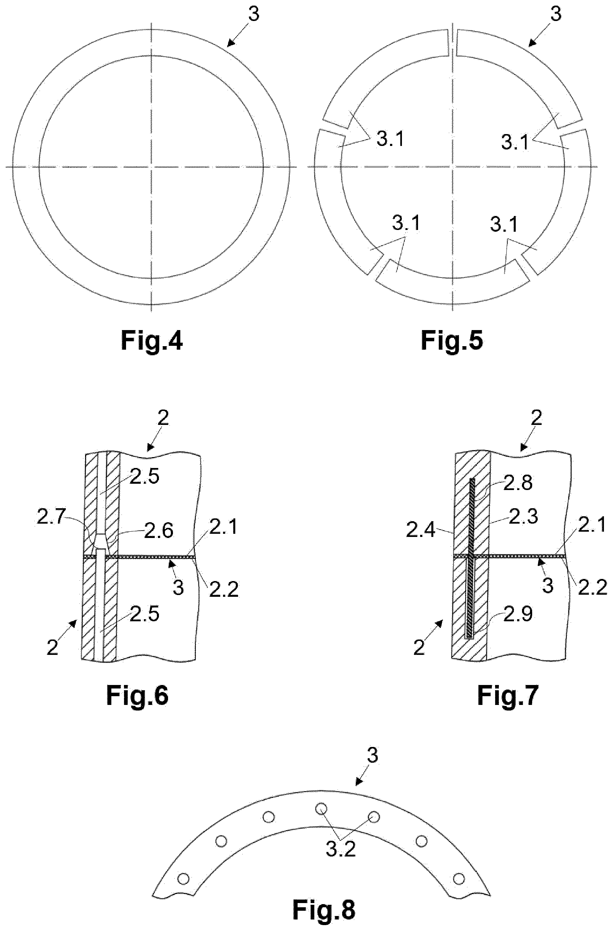

The joint (3) can be a single piece, Figures 2, 3, 4, 6 to 10, forming a continuous ring, or it can be configured by multiple segments (3.1), Figure 5, as a split ring, which is convenient when of a certain size that makes it difficult to manipulate if it were a single piece, as in the case of wind turbines in which the joint (3) can reach several meters in diameter.

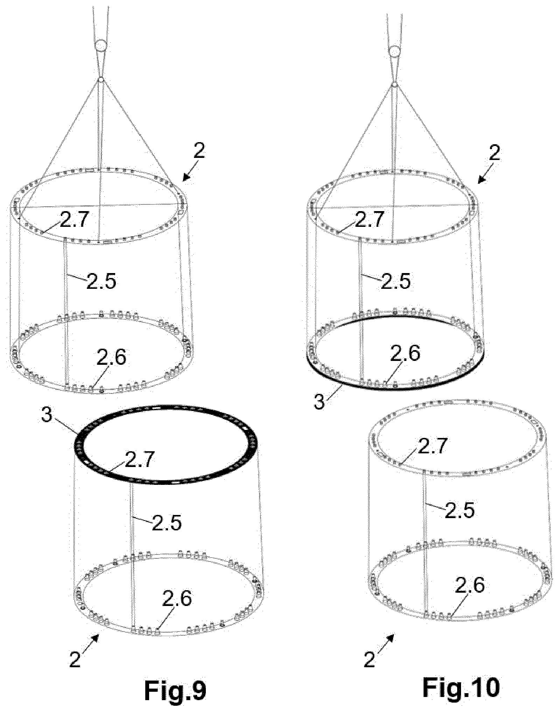

Another option is that each section (2) includes vertical through-holes (2.5) between the lower face (2.1) and the upper face (2.2). Specifically, each vertical hole (2.5) includes a conical or pyramidal opening (2.6) to the lower face (2.1) and a tubular projection (2.7) from the upper face (2.2), Figure 6, or vice versa, not shown in the figures, a conical or pyramidal opening (2.6) to the upper face (2.2) and a tubular projection (2.7) from the lower face (2.1); so that the conical or pyramidal opening (2.6) of one section (2) can be housed in the tubular projection (2.7) of the adjacent section (2), Figure 6. Figures 9 and 10 show these configurations, drawing only one vertical hole (2.5) per section (2), for clarity, before assembling two sections (2), the vertical holes (2.5) being grouped in fours, which is one embodiment, although it could be any other, such as equidistant vertical holes (2.5), in other groups, asymmetrically, etc. The vertical holes (2.5) are usually used so that cables or similar, not shown, run through them as tie rods and with the possibility of regulation in order to modify the rigidity of the tower (1), as is known in the state of the art.

Another option is that each section (2) includes a vertical bar (2.8) of corrugated steel inserted between the inner face (2.3) and the outer face (2.4), which projects from the lower face (2.1), and a housing (2.9) from the upper face (2.2), Figure 7, or vice versa, not shown in the figures, a vertical bar (2.8) projecting from the upper face (2.2), and a housing (2.9) from the lower face (2.1); so that the vertical bar (2.8) of one section (2) can be housed in the housing (2.9) of the adjacent section (2), Figure 7.

In these optional configurations described, the joint (3) must correspond with the vertical holes (2.5) or the vertical bars (2.8), whereby the joint (3) includes perforations (3.2) in correspondence with each vertical hole (2.5) or each vertical bar (2.8).

### Example

As an example of the above, shown are the results of the first and second natural frequencies (in Hz) obtained by using materials with different mechanical characteristics in the execution of the joints (3) in the case of a 5 MW power wind turbine installed on a concrete tower (1) with a hub height of 90 metres. The value of 38,000 MPa corresponds to a concrete joint as known in the state of the art, the values of 2,000 to 50 MPa correspond to joints (3) made of polymeric material such as those of the invention.

| Thickness (mm) | Modulus of elasticity (MPa) | | | | |
|---|---|---|---|---|---|
| | 38,000 | 5,000 | 2,000 | 500 | 50 |
| 40 | 0.429 | 0.416 | 0.368 | 0.326 | 0.148 |
| | | 2.375 | 2.105 | 1.869 | 0.853 |
| 20 | | 0.422 | 0.395 | 0.367 | 0.198 |
| | | 2.410 | 2.257 | 2.101 | 1.139 |
| 10 | | 0.425 | 0.411 | 0.394 | 0.254 |
| | 2.447 | 2.428 | 2.346 | 2.254 | 1.460 |
| 8 | | 0.426 | 0.414 | 0.401 | 0.273 |
| | | 2.432 | 2.365 | 2.289 | 1.564 |
| 4 | | 0.427 | 0.421 | 0.414 | 0.325 |
| | | 2.440 | 2.405 | 2.364 | 1.864 |

It can be seen that a joint (3) made of polymeric material with a relatively high modulus of elasticity, 5,000 MPa, has a similar behaviour to a concrete joint. As joints (3) with lower moduli of elasticity are used, the behaviour of the tower (1) changes, and can be adjusted at will and according to the required application.

## Claims

1. Concrete tower (1) having multiple sections (2), each section (2) having an annular configuration and comprising a lower face (2.1), an upper face (2.2), an inner face (2.3) and an outer face (2.4), each section (2) being arranged superimposed with an adjacent section (2), the lower face (2.1) of one section (2) being superimposed on the upper face (2.2) of the adjacent section (2), **characterised in that** the lower face (2.1) and the upper face (2.2) are flat, a joint (3) with an annular configuration is arranged in contact with the lower face (2.1) and the upper face (2.2) of adjacent sections (2), the joint (3) being made of polymeric material.

2. Concrete tower (1) according to claim 1 wherein the polymeric material has a modulus of elasticity less than or equal to 2,000 MPa.

3. Concrete tower (1) according to claim 1 wherein the polymeric material is one selected from among the following or a combination thereof: rubber, polyamide, polytetrafluoroethylene, polyethylene, polypropylene, polyurethane, polyamide and polycarbonate.

4. Concrete tower (1) according to claim 3 wherein the polymeric material includes reinforcing fibres.

5. Concrete tower (1) according to claim 1 wherein the joint (3) has a thickness of between 4 mm and 40 mm.

6. Concrete tower (1) according to claim 1 wherein the joint has a coefficient of friction between 0.05 and 0.75.

7. Concrete tower (1) according to claim 1 wherein the joint (3) is a single piece or is configured by multiple segments (3.1).

8. Concrete tower (1) according to claim 1 wherein each section (2) includes vertical through-holes (2.5) between the lower face (2.1) and the upper face (2.2).

9. Concrete tower (1) according to claim 8 wherein each vertical hole (2.5) includes a conical or pyramidal opening (2.6) to the lower face (2.1) and a tubular projection (2.7) from the upper face (2.2), or vice versa, so that the conical or pyramidal opening (2.6) of one section (2) can be housed in the tubular projection (2.7) of the adjacent section (2).

10. Concrete tower (1) according to claim 8 wherein each section (2) includes a vertical bar (2.8) of corrugated steel inserted between the inner face (2.3) and the outer face (2.4), which projects from the lower face (2.1), and a housing (2.9) from the upper face (2.2), or vice versa, so that the vertical bar (2.8) of one section (2) can be housed in the housing (2.9) of the adjacent section (2).

11. Concrete tower (1) according to any of claims 8 to 10 wherein the joint (2) includes perforations (3.2) in correspondence with each vertical hole (2.5) or each vertical bar (2.8).
